(19) Europäisches Patentamt / European Patent Office / Office européen des brevets

(11) **EP 1 876 757 B1**

(12) **EUROPEAN PATENT SPECIFICATION**

(45) Date of publication and mention
of the grant of the patent:
**01.07.2009 Bulletin 2009/27**

(51) Int Cl.:
*H04L 12/26* (2006.01)     *H04L 12/56* (2006.01)

(21) Application number: **06300766.0**

(22) Date of filing: **06.07.2006**

(54) **Effective bandwidth estimation of a bursty packet stream**

Abschätzung der effektiven Bandbreite eines Burst-Paketfluss

Evaluation de la bande passante effective d'un courant de paquets en rafales

(84) Designated Contracting States:
**AT BE BG CH CY CZ DE DK EE ES FI FR GB GR
HU IE IS IT LI LT LU LV MC NL PL PT RO SE SI
SK TR**

(43) Date of publication of application:
**09.01.2008 Bulletin 2008/02**

(73) Proprietor: **Alcatel Lucent
75008 Paris (FR)**

(72) Inventor: **Lautenschlaeger, Wolfram
DE 74343, Sachsenheim (DE)**

(74) Representative: **Urlichs, Stefan et al
Alcatel Lucent
Intellectual Property & Standards
70430 Stuttgart (DE)**

(56) References cited:
**US-A1- 2005 226 249     US-B1- 6 597 660
US-B1- 6 891 798**

• **ROCH GUERIN ET AL: "EQUIVALENT CAPACITY
AND ITS APPLICATION TO BANDWIDTH
ALLOCATION IN HIGH-SPEED NETWORKS"
IEEE JOURNAL ON SELECTED AREAS IN
COMMUNICATIONS, IEEE SERVICE CENTER,
PISCATAWAY, NJ, US, vol. 9, no. 7, 1 September
1991 (1991-09-01), pages 968-981, XP000272772
ISSN: 0733-8716**
• **GRIECO L A ET AL: "ADAPTIVE RATE CONTROL
FOR STREAMING FLOWS OVER THE INTERNET"
MULTIMEDIA SYSTEMS, ACM, NEW YORK, NY,
US, vol. 9, no. 6, June 2004 (2004-06), pages
517-532, XP001196273 ISSN: 0942-4962**

**Description**

**Field of the Invention**

The present invention relates to the field of telecommunications and more particularly to a method of estimating an effective bandwidth of a bursty stream of data packets in a packet network.

**Background of the Invention**

It is necessary, for various traffic engineering tasks, to know the bandwidth capacity that is required to transmit a particular traffic at given loss rate. Average measurements of the traffic yield a first hint on the required bandwidth, however, for stochastic traffic this is not enough. Due to the traffic fluctuations, half of the time the bandwidth demand is above the average level. In consequence, stochastic traffic needs bandwidth for transmission in excess to the average level. The required degree of over-dimensioning depends on the burstiness of traffic. The total of mean plus overdemensioning is called Effective Bandwidth of a traffic. It is the minimum bandwidth capacity that is required for a path to carry the traffic at given quality.

The article "Dynamische Dimensionierung in Kernnetzen - Möglichkeiten und Grenzen", ITG Fachbericht 193, VDE Verlag, 2006 by Wolfram Lautenschläger describes that the over-dimensioning (or burstiness) depends mainly on the relationship between application access bandwidth and average bandwidth of the flow. It is known that in a network with fractions of different access bandwidths a so called equivalent access bandwidth can be determined by means of the weighted average of those particular access bandwidths. The mean traffic contribution from every fraction is acting here as the weighting factor. This way the burstiness or over-dimensioning factor can be calculated throughout a hierarchical network.

In some cases, however, it is hard to collect the required mean and access bandwidth figures. In fact, the access bandwidth, even if talking about core networks, is the bandwidth of the end user access, which is far away (logically as well as administratively) from the core network.

Co-pending European Patent Application "Method for determining actual Traffic Values and Network Elements therefor" by W. Lautenschläger, application number 06290434.7, proposes a signaling to communicate information about the bandwidth of the end user access to the core. However, this might be impossible or unreliable: Impossible because part of the network does not support the signaling protocol (multi vendor, legacy issues) and unreliable because the traffic aggregation is distributed over several administrative domains (LAN - local IP provider-WAN) with restricted trust level in-between. Also, in highly meshed networks, in opposite to the assumed hierarchical network, the mixture of traffic fractions might be distributed unevenly, so the burstiness could vary due to inhomogeneous traffic splits.

US 6,697,369 describes an admission control mechanism in broadband ATM networks, which uses an overbooking technique based on aggregate effective bandwidth. An overbooking gain factor is developed based on long-term measurement supplied periodically by network switches. This overbooking gain is derived from a count of cells arriving in periodic time slots and is updated from time to time based on measurement values sent from individual switches to the operations system. The described method is laborious and complex as it requires to read out a plurality of counter values in real time. Moreover, cell count is not a significant measure in modern packet networks, which typically support variable packet length.

The article "Equivalent Capacity and Its Application to Bandwidth Allocation in High-Speed Networks" by, R. Guérin et al, IEEE Journal on Selected Areas in Communications, no. 7 9/1991, pages 968-981 describes a mathematical method to calculate the effective bandwidth from known source parameters. In accordance with the Fluid-Flow approximation, the effective bandwidth is defined as the lowest constant rate value C that ensures a given buffer overflow probability when used to empty a buffer into which the data flow is written. The method requires, however, knowledge of the source parameters.

US 2005/0226249 A1 describes a method for dynamic allocation of network resources that uses a measurement-based estimator to compute the bandwidth requirements of the measured traffic. A copy of the traffic stream is fed to the estimator. Different implementations of the estimator are proposed. One cited implementation uses a buffer to calculate from the buffer size and the loss rate the effective bandwidth. However, the document mentions that no robust mechanism currently exists for computing this value.

US 6,891,798 discloses a method for estimating the equivalent bandwidth using online-measurements. A bandwidth estimator is coupled to a data collector to estimate on effective bandwidth. The data collector includes a cell loss estimator to estimate the loss ration and a traffic density calculator to calculate the traffic density over a period of predetermined intervals. The loss ratio is a ratio between a number of cells arriving at the queue when the queue is empty and a number of cell arrivals. The traffic density is a number of traffic units arriving at the queue in the interval. A traffic unit is either a cell or a bit in the traffic data stream. The traffic density calculator includes a traffic envelope sampler and a counter. The traffic envelope sampler samples the traffic data stream according to a timing signal corresponding to the predetermined interval. The counter counts the number of traffic units from the sampled traffic data stream. The traffic envelope sampler records the total number of cell arrivals during a pre-defined time interval. The bandwidth estimator includes a loss ratio normalizer, a local rate estimator, and an effective bandwidth calculator. The loss ratio normalizer normalizes the loss ratio with respect to a maximum ratio and a queue length. The local rate estimator determines a local rate based on the traffic density. The effective bandwidth calculator calculates the effective bandwidth as the ratio between the local rate and the normalized loss ratio. This method is complex and difficult to implement into existing equipment.

It is therefore an object of the present invention to provide a simple and effective method and related apparatus for estimating an effective bandwidth of a bursty stream of data packets in a packet network.

## Summary of the Invention

These and other objectives that appear below ore achieved by an apparatus for estimating an effective bandwidth of a traffic stream of data packets in a packet network that contains a buffer model which is fed by a copy of said traffic stream and which is drained at an adoptive service rate and a control device connected to said buffer model to register overflow events of said buffer model and adapted to adjust the adoptive service rate such that a packet loss rate corresponding to said overflow events equals a preset target loss rate. According to the invention, the target loss rate is higher than a predefined loss rate allowed for the traffic stream. The effective bandwidth is then calculated from the adjusted service rate according to predefined conversion rules.

The present invention proposes an estimation technique that is able to determine not only the mean bandwidth of a given traffic flow but also the required over-dimensioning for a path carrying that particular flow. Moreover, given the two values are available, the merger of several such flows can be dimensioned with correct reflection of the statistical multiplexing gain. This opens the opportunity for a fine grained bandwidth management in a network with both feed-forward as wall as feed-back control.

The invention hence allows to estimate the burstiness of aggregated traffic without requiring any knowledge about the origin and nature of the traffic.

Moreover, the invention can easily be implemented into line card functionality of existing network devices and can hence deliver realistic input figures to network control functions such as traffic engineering, load balancing, virtual private networks, or premium traffic classes with quality of service guarantee.

Of particular advantage is the fact that the invention can be implemented locally with no regard to cooperation with other network devices. This enables to employ the invention in multi vendor, multi operator, and legacy environment.

## Brief Description of the Drawings

Preferred embodiments of the present invention will now be described with reference to the accompanying drawings in which

figure 1    shows a real time effective bandwidth estimation device according to a first embodiment of the invention and

figure 2    shows a second embodiment of a effective bandwidth estimation device.

## Detailed Description of the Invention

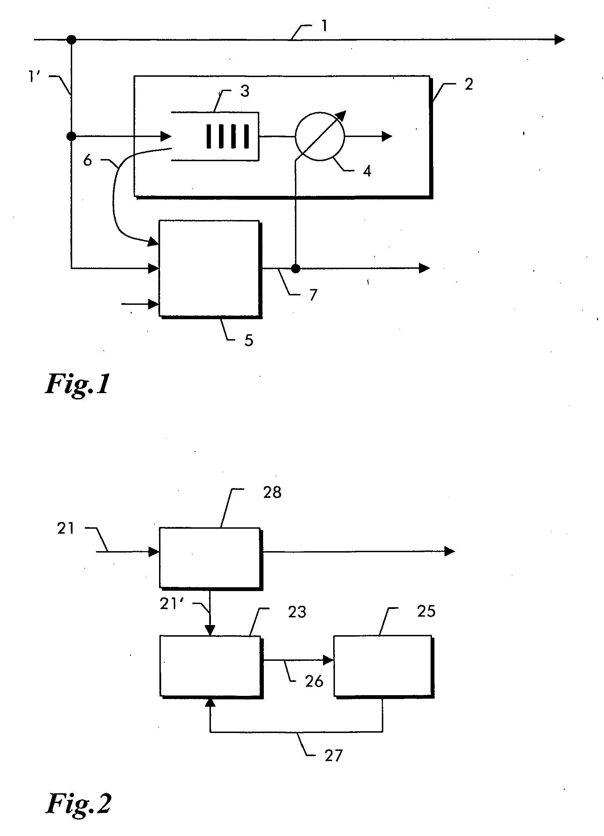

A first implementation of the invention is shown in figure 1. The traffic flow 1 under test is not affected directly. Only a copy 1' of the traffic flow is fed to a model 2 of a potentially lossy device. In the first embodiment, this buffer model 2 is implemented as a buffer 3 with limited memory and an output 4 serving at an adjustable rate. Whenever an overflow of the buffer occurs, this event 6 is registered by an adaptation device 5 that calculates the actual loss rate and compares it to a preset value. Depending on the comparison result, device 5 adjusts the serving output rate 7 of the loss model 2 accordingly. Higher serving rate is intended to reduce the losses, lower serving rate should increase the losses. By use of an appropriate adaptation algorithm the actual losses converge to the preset value, while the steady state serving rate 4 is the actual effective bandwidth at the preset loss rate.

For several reasons it is preferable that the preset loss rate is sufficiently high, for example $10^{-3}$. A lower loss rates would simply result in rare loss events, with the consequence of excessive long averaging time required by the adaptation algorithm. Since this configured loss rate is not the targeted value for the real traffic, where $10^{-8}$ could be required for example, the effective bandwidth 4 needs correction according to following relations:

$$C = \frac{erf^{-1}\left(1 - 2P_{target}\right)}{erf^{-1}\left(1 - 2P_{preset}\right)} \qquad (1)$$

$$B_{target} = C\left(B_{preset} - m\right) + m \qquad (2)$$

wherein

- $P_{preset}$ and $P_{target}$ is the loss probabilities as preset for device 5 and targeted for the real traffic, respectively;
- $B_{preset}$, $B_{target}$, is the effective bandwidth as estimated by the actual serving rate 4 and as required for the real traffic, respectively;
- $m$ is the mean bandwidth of traffic; and
- $erf^{-1}$ is the inverse Gaussian error function.

The above equation is based on the assumption, that the bandwidth distribution of the traffic is a Gaussian distribution, which is applicable for highly aggregated traffic. For a lower level of aggregation the accuracy of equations (1) and (2) is reduced but still sufficient.

Other more exact buffer models like for example the so called Fluid Model could equally be used with the invention. Such would result in more complicated implicit expressions, which could for example be implemented using a pre-calculated interpolation table. It would also be possible to provide a interpolation table with values for real traffic streams measured in a test environment.

A second preferred embodiment is shown in figure 2. The incoming traffic stream is fed to a packet header decoder. Such decoders are typically present on line cards anyway. The packet header decoder reads from the packet header the packet length and communicates the packet length 21' to a counter 23. Counter 23 is an increment/decrement counter with upper and lower limit and with an overflow flag. The counter has its lower limit at zero, and an upper limit which corresponds to the predefined buffer size of the model 2 from figure 1.

Whenever a packet arrives, the counter value is increased by the packet size. On the other hand the counter value is regularly decreased by the actual serving rate 27. An overflow event 26 is generated if the counter value hits the upper limit. This is communicated through the overflow flag to a controller 25, which runs an adaptation algorithm to determine the serving rate 27, at which the counter counts downwards.

The adaptation algorithm needs to do averaging, anyway. For this reason, the communication between counter 23 and controller 25 is not a time critical functionality. In consequence, the only high speed part of the measurement device is a counter with input from a packet header decoder on a line card of a network device such as a router or packet switch.

Adaptive filter algorithms are well known as such for channel or parameter estimation from various branches of communication and automatic control. One simple implementation example operates as follows:

- Set the serving rate **B** to a reasonable initial value.
- For each incoming packet calculate the resulting actual buffer filling.
- in case of an overflow, increase the serving rate **B** by

$$B_{i+1} = B_i + \gamma B_i \qquad (3)$$

- in case no overflow occurs: decrease the serving rate **B** by

$$B_{i+1} = B_i - \gamma B_i P_{preset} \qquad (4)$$

wherein

$\gamma$ is a small positive constant, controlling time scale of smoothing, stability and convergence speed of the adaptation
**$P_{preset}$** is the preset loss probability, and

*i* is the iteration index.

The increment is intentionally scaled by the actual serving rate to maintain a constant convergence speed at low values of **B**, even much below full rate. The scaling of loss-case and no-loss-case by (1-$P_{preset}$) and $P_{preset}$, respectively, is obvious, whereas this term is omitted in (3) because of 1-$P_{preset} \approx 1$.

It has to be noted that various modifications and extensions are possible to the above described embodiments without departing from the concept of the invention.

For example the model of the lossy device 2 could be also implemented as a digital low pass filter, which is detecting a sliding short time average of the packet stream, together with an adaptive limiter behind.

The traffic copy 1 of the original packet stream could be done selectively by a classification unit, feeding several devices according to figure 1, one for each packet class.

In case the classification unit uses hypothetical routing tables, this would enable bandwidth estimation of routings before even activation them in real routing tables. This allows a preplanning of the impact of routing on the network load.

## Claims

1. An apparatus for estimating an effective bandwidth of a traffic stream (1, 21) of data packets in a packet network, the apparatus comprising a buffer model (2, 23) which is fed by a copy of said traffic stream (1',21') and which is drained at an adoptive service rote (7, 27) and a control device (5, 25) connected to said buffer model (2, 23) to register overflow events of said buffer model (2, 23) and adapted to adjust the adaptive service rate (7, 27) such that a packet loss rate corresponding to said overflow events equals a preset target loss rate which is higher than a predefined loss rate allowed for said traffic stream in said network and wherein said apparatus comprises means for calculating the effective bandwidth from the adjusted service rote (7, 27) according to predefined conversion rules.

2. An apparatus according to claim 1, wherein said conversion rules comprise the equation

$$B_{target} = C(B_{preset} - m) + m$$

with

$$C = \frac{erf^{-1}(1 - 2P_{target})}{erf^{-1}(1 - 2P_{preset})}$$

wherein

- $P_{preset}$ and $P_{target}$ is the loss probabilities as preset and as targeted for the real traffic, respectively;
- $B_{preset}$, $B_{target}$ is the effective bandwidth as estimated by the adjusted serving rate (7, 27) and as required for the real traffic, respectively;
- m is the mean bandwidth of said traffic stream (1); and
- $erf^{-1}$ is the inverse Gaussian error function.

3. An apparatus according to claim 1, wherein said conversion rules are expressed in the form of a pre-calculated interpolation table.

4. An apparatus according to claim 1, wherein said buffer model comprises a buffer (3) having on output (4) serving said buffer (4) at said adjustable service rate (7).

5. An apparatus according to claim 1, wherein said buffer model is an increment/decrement counter (23) with upper and lower limit, and on overflow flag.

6. An apparatus according to claim 5 comprising a packet header decoder for reading from the packet header of said data packets their packet length and for increasing the count (23) value of said counter by said packet length.

7. An apparatus according to claim 1, wherein said buffer model (2) comprises a digital low pass filter adapted to detect a sliding short time average of said traffic stream and an adaptive limiter connected behind said low pass filter.

8. An apparatus according to claim 1, comprising several buffer models for different service classes and a classification unit for selectively feeding as said traffic copy (1', 21') to each of said buffer models data packets from said traffic stream having the corresponding service class, respectively.

9. A method of estimating an effective bandwidth of a traffic stream (1, 21) of data packets in a packet network comprising the steps of;

> feeding a buffer model by a copy of said traffic stream (1', 21');
> draining said buffer model (2, 23) at an adaptive service rate (7, 27);
> detecting overflow events of said buffer model (2, 23);
> determining from said overflow events a packet loss rate;
> adjusting said adaptive service rate (7, 27) such that said packet loss rate equals a preset target loss rate which is higher than a predefined loss rote allowed for said traffic stream in said network; and
> calculating the effective bandwidth from the adjusted service rote (7, 27) according to predefined conversion rules.

10. A method according to claim 9 wherein said step of adjusting is performed such that in case of buffer overflow the service rate is increased and in case of no buffer overflow the service rate decreased.

## Patentansprüche

1. Eine Vorrichtung zum Abschätzen einer effektiven Bandbreite eines Verkehrsstroms (1, 21) von Datenpaketen in einem Paketnetzwerk, wobei die Vorrichtung ein Puffermuster (2, 23), welches von einer Kopie des besagten Verkehrsstroms (1', 21') gespeist und bei einer adaptiven Bedienrate (7, 27) entleert wird, und eine Steuervorrichtung (5, 25), welche an das besagte Puffermuster (2, 23) angeschlossen ist, um Überlaufereignisse des besagten Puffermusters (2, 23) aufzuzeichnen, und fähig ist, die adaptive Bedienrate (7, 27) so anzupassen, dass eine Paketverlustrate, welche den besagten Überlaufereignissen entspricht, einer vorgegebenen Ziel-Verlustrate gleicht, die höher ist als eine für den besagten Verkehrsstrom in dem besagten Netzwerk zulässige festgelegte Verlustrate, umfasst, und wobei die besagte Vorrichtung Mittel zum Berechnen der effektiven Bandbreite ausgehend von der angepassten Bedienrate (7, 27) gemäß festgelegten Konvertierungsregeln umfasst.

2. Eine Vorrichtung nach Anspruch 1, wobei die besagten Konvertlerungsregeln die Gleichung

$$B_{target} = C(B_{preset} - m) + m$$

mit

$$C = \frac{erf^{+1}(1 - 2P_{target})}{erf^{-1}(1 - 2P_{preset})}$$

enthalten,
wobei

> - $P_{preset}$ und $P_{target}$ jeweils die voreingestellte und die für den tatsächlichen Verkehr als Ziel gesetzte Verlustwahrscheinlichkeit sind;
> - $B_{preset}$ $B_{target}$ jeweils die effektive anhand der angepassten Bedienrate (7, 27) geschätzte Bandbreite und die für den tatsächlichen Verkehr geforderte Bandbreite sind;
> - $m$ die mittlere Bandbreite des besagten Verkehrsstroms (1) ist; und

- *erf⁻¹* die inverse Gaußsche Fehlerfunktion ist.

3. Eine Vorrichtung nach Anspruch 1, wobei die besagten Konvertierungsregeln in der Form einer vorausberechneten Interpolationstabelle ausgedrückt werden.

4. Eine Vorrichtung nach Anspruch 1, wobei das besagte Puffermuster einen Puffer (3) mit einem Ausgang (4), welcher den besagten Puffer (4) bei der besagten anpassbaren Bedienrate (7) bedient, umfasst.

5. Eine Vorrichtung nach Anspruch 1, wobei das besagte Puffermuster ein Inkrement/Dekrementzähler (23) mit einer oberen und einer unteren Grenze und einem Überlauf-Flag ist.

6. Eine Vorrichtung nach Anspruch 5, welche einen Paketkopf-Decoder umfasst, um die Paketlänge aus dem Paketkopf der besagten Datenpakete auszulesen und den Zählwert (23) des besagten Zählers um die besagte Paketlänge zu erhöhen.

7. Eine Vorrichtung nach Anspruch 1, wobei das besagte Puffermuster (2) einen digitalen Tiefpassfilter, welcher fähig ist, einen gleitenden kurzzeitigen Durchschnitt des besagten Verkehrsstrom zu erkennen, und einen hinter dem besagten Tiefpassfilter angeschlossenen adaptiven Begrenzer umfasst.

8. Eine Vorrichtung nach Anspruch 1, welche mehrere Puffermuster für verschiedene Dienstklassen und eine Klassifizierungseinheit für das besagte selektive Einspeisen der Kopie des Verkehrs (1', 21') Jeweils in ein jedes der besagten Puffermuster-Datenpakete aus dem besagten Verkehrsstrom, welcher eine entsprechende Dienstklasse aufweist, umfasst.

9. Ein Verfahren zum Abschätzen einer effektiven Bandbreite eines Verkehrsstroms (1, 21) von Datenpaketen in einem Paketnetzwerk, welches die folgenden Schritte umfasst:

   Speisen eines Puffermusters mit einer Kopie des besagten Verkehrsstroms (1',21');
   Entleeren des besagten Puffermusters (2, 23) bei einer adaptiven Bedienrate (7, 27);
   Erkennen von Überlaufereignissen des besagten Puffermusters (2, 23);
   Ermitteln einer Paketverlustrate anhand der besagten Überlaufereignisse;
   Anpassen der besagten adaptiven Bedienrate (7, 27), so dass die besagte Paketverlustrate einer vorgegebenen Ziel-Verlustrate gleicht, die höher ist als eine für den besagten Verkehrsstrom in dem besagten Netzwerk zulässige festgelegte Verlustrate; und
   Berechnen der effektiven Bandbreite ausgehend von der angepassten Bedienrate (7, 27) gemäß festgelegten Konvertierungsregeln.

10. Ein Verfahren nach Anspruch 9, wobei der besagte Schritt des Anpassens so ausgeführt wird, dass die Bedienrate im Fall eines Pufferüberlaufs erhöht und, wenn kein Pufferüberlauf vorliegt, gesenkt wird.

**Revendications**

1. Appareil pour estimer une bande passante réelle d'un flux de trafic (1, 21) de paquets de données dans un réseau à paquets, l'appareil comprenant un modèle de tampon (2, 23) qui est alimenté par une copie dudit flux de trafic (1', 21') et qui est vidé à un débit de service adaptatif (7, 27) ainsi qu'un dispositif de commande (5, 25) connecté audit modèle de tampon (2, 23) pour enregistrer les événements de dépassement de capacité dudit modèle de tampon (2, 23) et adapté pour ajuster le débit de service adaptatif (7, 27) de sorte qu'un taux de pertes de paquets correspondant auxdits événements de dépassement de capacité soit égal à un taux de pertes de paquets voulu prédéfini qui est supérieur à un taux de pertes prédéfini autorisé pour ledit flux de trafic dans ledit réseau et ledit appareil comprenant des moyens pour calculer la bande passante réelle à partir du débit de service ajusté (7, 27) conformément à des règles de conversion prédéfinies.

2. Appareil selon la revendication 1, lesdites règles de conversion comprenant l'équation suivante :

$$B_{target} = C(B_{preset} - m) + m$$

avec

$$C = \frac{erf^{-1}(1-2P_{target})}{erf^{-1}(1-2P_{preset})}$$

où

- $P_{preset}$ et $P_{target}$ désignent respectivement les probabilités de pertes prédéfinies et voulues pour le trafic réel respectivement ;
- $B_{preset}$ $B_{target}$ désignent la bande passante réelle, respectivement telle qu'elle est estimée par le débit de service ajusté (7, 27) et telle qu'elle est requise pour le trafic réel ;
- m désigne la bande passante moyenne dudit flux de trafic (1) ; et
- $erf^{-1}$ désigne la fonction d'erreur de Gauss inverse.

3. Appareil selon la revendication 1, lesdites règles de conversion étant exprimées sous la forme d'un tableau d'interpolation précalculé.

4. Appareil selon la revendication 1, ledit modèle de tampon comprenant un tampon (3) doté d'une sortie (4) qui dessert ledit tampon (4) audit débit de service ajustable (7).

5. Appareil selon la revendication 1, ledit modèle de tampon étant un compteur d'incrémentation/décrémentation (23) avec une limite supérieure et inférieure et un marqueur de dépassement de capacité.

6. Appareil selon la revendication 5, comprenant un décodeur d'en-tête de paquet pour lire à partir de l'en-tête de paquet desdits paquets de données, leur longueur de paquet et pour accroître la valeur comptée (23) par ledit compteur de ladite longueur de paquet.

7. Appareil selon la revendication 1, ledit modèle de tampon (2) comprenant un filtre passe-bas numérique adapté pour détecter une moyenne glissante à court terme dudit flux de trafic et un limiteur adaptatif connecté derrière ledit filtre passe-bas.

8. Appareil selon la revendication 1, comprenant plusieurs modèles de tampon pour différentes classes de service et une unité de classification pour alimenter de manière sélective sous la forme de ladite copie du trafic (1', 21') chacun desdits modèles de tampon avec les paquets de données dudit flux de trafic qui possède la classe de service correspondante.

9. Procédé d'estimation d'une bande passante réelle d'un flux de trafic (1, 21) de paquets de données dans un réseau à paquets comprenant les étapes de :

Alimentation d'un modèle de tampon avec une copie dudit flux de trafic (1',21');
Vidage dudit modèle de tampon (2, 23) à un débit de service adaptatif (7,27) ;
Détection des événements de dépassement de capacité dudit modèle de tampon (2, 23);
Détermination d'un taux de pertes de paquets à partir desdits événements de dépassement de capacité ;
Ajustage dudit débit de service adaptatif (7, 27) de sorte que ledit taux de pertes de paquets soit égal à un taux de pertes de paquets voulu prédéfini qui est supérieur à un taux de pertes prédéfini autorisé pour ledit flux de trafic dans ledit réseau ; et
Calcul de la bande passante réelle à partir du débit de service ajusté (7, 27) conformément à des règles de conversion prédéfinies

10. Procédé selon la revendication 9, dans lequel ladite étape d'ajustage est accomplie de telle sorte qu'en cas de dépassement de la capacité du tampon, le débit de service est augmenté et en l'absence de dépassement de la capacité du tampon, le débit de service est réduit.

**Fig.1**

**Fig.2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 06290434 A
- US 6697369 B
- US 20050226249 A1
- US 6891798 B

### Non-patent literature cited in the description

- Dynamische Dimensionierung in Kernnetzen - Möglichkeiten und Grenzen. **WOLFRAM LAUTENSCHLÄGER.** ITG Fachbericht 193. VDE Verlag, 2006
- **R. Guérin et al.** Equivalent Capacity and Its Application to Bandwidth Allocation in High-Speed Networks. *IEEE Journal on Selected Areas in Communications,* September 1991, (7), 968-981